# EUROPEAN PATENT APPLICATION

(11) **EP 1 422 265 A1**
(43) Date of publication of application: **26.05.2004**
(21) Application number: 03257192.9
(22) Date of filing: 14.11.2003
(51) Int. Cl.: C08L 51/04, C08L 55/02, B41M 5/26, C08L 33/12, C08F 279/02

(54) **White coloring laser-marking thermoplastic resin composition**

(30) Priority: 15.11.2002 JP 2002331684
(71) Applicant: Techno Polymer Co., Ltd., Tokyo (JP)
(72) Inventor: Kawakami, Kazuyoshi, Techno Polymer Co. Ltd., Tokyo (JP); Sumimoto, Norifumi, Techno Polymer Co. Ltd., Tokyo (JP); Mawatari, Masaaki, Techno Polymer Co. Ltd., Tokyo (JP)
(74) Representative: Benson, John Everett

(57) **Abstract**

The present invention relates to a white coloring laser-marking thermoplastic resin composition, comprising:
(A) a rubber-reinforced thermoplastic resin;
(B) a methacrylic resin obtained by polymerizing from more than 90% by mass to 100% by mass of a methacrylic acid ester (b1) with from 0% by mass to less than 10% by mass,of other vinyl-based monomer (b2) copolymerizable with the methacrylic acid ester;
(C) a maleimide-based (co)polymers excluding the component (B), an aromatic polycarbonate resin or mixture thereof; and
(D) a black-based substance,
said components (A), (B) and (C) being contained in amounts of 10 to 90% by mass, 9 to 65% by mass and 1 to 81% by mass, respectively, and the component (D) being contained in an amount of 0.01 to 5 parts by mass based on 100 parts by mass of (A) + (B) + (C) .

## Description

### BACKGROUND OF THE INVENTION

The present invention relates to a white coloring laser-marking thermoplastic resin composition, and more particularly, to a white coloring laser-marking thermoplastic resin composition capable of forming clear markings on the surface of a molded product obtained therefrom by irradiating a laser thereonto, and providing a molded product which is excellent in not only appearance and impact resistance, but also durable recognizability of the laser markings formed thereon and heat resistance.

Hitherto, there are known techniques for irradiating a molded product made of thermoplastic resins with laser for coloring the irradiated portions into black or white color. Such laser-marking techniques have been used in many applications for printing various marks or characters on respective key tops of a keyboard, printing marks or characters on a panel of facsimile, etc., because these laser-marking techniques allow the marks or characters to be printed at lower costs as compared to those printed by tampon (pad) printing method, and the marks or characters printed by the laser-marking techniques are excellent in durable recognizability.

As conventional laser marking thermoplastic resin materials for forming white marks or characters by the laser marking techniques, there are known resin compositions composed of a rubber-reinforced resin, an ethylene-(meth)acrylic acid ester-carbon dioxide-based tercopolymer and a black-based compound (for example, Japanese Patent Application Laid-open (KOKAI) No. 2001-139758), resin compositions composed of an acrylic resin, a styrene-based resin and a black dye or pigment (for example, Japanese Patent Application Laid-open (KOKAI) No. 11-1596(1999)), and resin compositions composed of a rubber-containing graft copolymer, an unsaturated carboxylic acid ester-based copolymer, a vinyl-based copolymer and carbon black (for example, Japanese Patent Application Laid-open (KOKAI) No. 2000-198903).

In addition, in the case of key boards of notebook-type personal computers, etc., which tend to be readily heated, as well as key boards or panels used under a high-temperature condition, such molded products made of the laser-marking thermoplastic resin materials are required to have a good heat resistance (heat-deformation resistance). However, white marks or characters thus formed on the key tops of keyboards made of the above resin compositions by the laser-marking method tend to suffer from problems such as poor durable recognizability as well as lack of contrast, poor impact resistance, poor heat resistance, etc, of the laser markings, due to break and thin portions caused on the surface thereof with increase in frequency of key touches. Thus, conventional white coloring laser-marking thermoplastic resin compositions have failed to overcome all of the above-described problems.

### SUMMARY OF THE INVENTION

In view of the above problems, an object of the present invention is to provide a white coloring laser-marking thermoplastic resin composition capable of forming clear laser markings such as white characters on the surface of a molded product produced therefrom, and providing such a molded product which is excellent in not only appearance and impact resistance, but also durable recognizability of the laser markings formed thereon and heat resistance.

As a result of the present inventors' earnest study to solve the above subject, it has been found that the above object can be accomplished by such a thermoplastic resin composition composed of a rubber-reinforced thermoplastic resin, a methacrylic resin, a maleimide-based (co)polymer and/or an aromatic polycarbonate resin, and a black-based substance. The present invention has been attained on the basis of the above finding.

In an aspect of the present invention, there is provided a white coloring laser-marking thermoplastic resin composition, comprising:
(A) a rubber-reinforced thermoplastic resin comprising a rubber-reinforced copolymer resin (a1) obtained by polymerizing a monomer component containing an aromatic vinyl-based compound, or the aromatic vinyl-based compound and other vinyl-based monomer copolymerizable with the aromatic vinyl-based compound, in the presence of a rubber polymer (a), or a composition of the rubber-reinforced copolymer resin (a1) and a (co)polymer (a2) of a vinyl-based monomer, said rubber polymer (a) being contained in an amount of 0.5 to 60% by mass in the component (A);
(B) a methacrylic resin obtained by polymerizing from more than 90% by mass to 100% by mass of a methacrylic acid ester (b1) with from 0% by mass to less than 10% by mass of other vinyl-based monomer (b2) copolymerizable with the methacrylic acid ester, with the proviso that a total content of b1 and b2 is 100% by mass;
(C) a maleimide-based (co)polymers excluding the component (B), an aromatic polycarbonate resin or mixture thereof; and
(D) a black-based substance,
said components (A), (B) and (C) being contained in amounts of 10 to 90% by mass, 9 to 65% by mass and 1 to 81% by mass, respectively, with the proviso that a total content of the components (A), (B) and (C) is 100% by mass, and the component (D) being contained in an amount of 0.01 to 5 parts by mass based on 100 parts by mass of a total amount of the components (A), (B) and (C).

### DETAILED DESCRIPTION OF THE INVENTION

The present invention will be described in detail below. The white coloring laser-marking thermoplastic resin composition of the present invention comprises a rubber-reinforced thermoplastic resin (hereinafter referred to as a "component (A)"), a methacrylic resin (hereinafter referred to as a "component (B)"), a maleimide-based (co)polymer and/or an aromatic polycarbonate resin (hereinafter referred to as a "component (C)"), and a black-based substance (hereinafter referred to as a "component (D)").

The rubber-reinforced thermoplastic resin used as the component (A) in the present invention includes (1) a rubber-reinforced copolymer resin (a1) obtained by polymerizing a monomer component containing an aromatic vinyl-based compound solely, or the aromatic vinyl-based compound and the other vinyl-based monomer copolymerizable with the aromatic vinyl-based compound (such as a cyanided vinyl compound, a (meth)acrylic acid ester compound, etc.) in the presence of a rubber polymer (a), or (2) a composition of the rubber-reinforced copolymer resin (a1) and a (co)polymer (a2) obtained by (co)polymerizing the above monomer component in the absence of the rubber polymer (a) (for example, styreneacrylonitrile copolymers, etc.). The rubber polymer (a) is contained in the component (A) in an amount of 0.5 to 60% by mass.

Meanwhile, the above (co)polymer (a2) may not be necessarily used in the form of a mixture with the above rubber-reinforced copolymer resin (a1). For example, the (co)polymer (a2) may be blended with the respective other components during the mixing processes for production of the thermoplastic resin composition of the present invention. The mixing method of the (co)polymer (a2) is not particularly restricted.

As the rubber polymer (a) used for forming the component (A) of the present invention, there may be exemplified (1) diene-based rubber polymers, and (2) non-diene-based rubber polymers. Examples of the diene-based rubber polymers (1) may include polybutadiene, styrene-butadiene copolymers, styrene-isoprene copolymers, butadiene-acrylonitrile copolymers, butadiene-(meth)acrylic acid ester copolymers, styrene-butadiene block copolymers, styrene-isoprene block copolymers, etc.

Examples of the non-diene-based rubber polymers (2) may include ethylene-a-olefin-based rubber polymers such as ethylene-α-olefin copolymers and ethylene-α-olefin-non-conjugated diene copolymers; hydrogenated products of diene-based polymers such as hydrogenated products of styrene-butadiene (block) copolymers, hydrogenated products of styrene-isoprene (block) copolymers, hydrogenated products of butadiene-acrylonitrile copolymers, hydrogenated products of butadiene-(meth)acrylic acid ester copolymers, hydrogenated products of other butadiene-based (co)polymers and hydrogenated products of styrene-butadiene random copolymers; silicone-based rubbers; acrylic rubbers; or the like. These rubber polymers (a) used in the component (A) of the present invention may be used singly or in the form of a mixture of any two or more thereof.

In the case where the rubber-reinforced copolymer resin (a1) can be emulsion-polymerized in the presence of the rubber polymer (a), the average rubber particle diameter of the rubber polymer (a) used therein is preferably 0.1 to 2 µm, more preferably 0.12 to 0.8 µm from the standpoints of a good appearance of the surface of the obtained molded products as well as a good impact resistance thereof.

The content of the rubber polymer (a) in the component (A) of the present invention is 0.5 to 60% by mass, preferably 1 to 50% by mass, more preferably 5 to 40% by mass. When the content of the rubber polymer (a) in the component (A) is less than 0.5% by mass, the obtained composition tends to be deteriorated in impact resistance. On the other hand, when the content of the rubber polymer (a) in the component (A) is more than 60% by mass, the obtained composition tends to be deteriorated in rigidity.

Also, in the case where the composition of the rubber-reinforced copolymer resin (a1) and the (co)polymer (a2) is used as the component (A), such a component (A) having the aimed rubber content can be obtained by first producing the rubber-reinforced copolymer resin (a1) having a large rubber content (for example, rubber content of 20 to 70% by mass), and then mixing the thus produced rubber-reinforced copolymer resin (a1) with the (co)polymer (a2).

Examples of the aromatic vinyl compounds used in the component (A) of the present invention may include styrene, α-methyl styrene, o-methyl styrene, p-methyl styrene, ethyl styrene, vinyl toluene, vinyl xylene, methyl-α-methyl styrene, t-butyl styrene, divinyl benzene, 1,1-diphenyl styrene, N,N-diethyl-p-aminomethyl styrene, N,N-diethyl-p-aminoethyl styrene, vinyl naphthalene, vinyl pyridine, chlorinated styrenes such as monochlorostyrene and dichlorostyrene, brominated styrenes such as monobromostyrene and dibromostyrene, monofluorostyrene or the like. Of these aromatic vinyl compounds, preferred are styrene, α-methyl styrene and p-methyl styrene. Also, these aromatic vinyl compounds may be used singly or in combination of any two or more thereof.

The content of the aromatic vinyl compound in the rubber-reinforced copolymer resin (a1) is preferably 10 to 100% by mass, more preferably 15 to 80% by mass, especially preferably 45 to 70% by mass based on the monomer component.

Examples of the other vinyl-based monomer copolymerizable with the aromatic vinyl compound which may be optionally used upon the graft copolymerization, may include cyanided vinyl compounds, (meth)acrylic acid esters (in other words: methacrylic ester or methacrylate), maleimide-based compounds, vinyl-based monomers containing functional groups, or the like. Of these monomers, preferred is at least one monomer selected from the group consisting of cyanided vinyl compounds, (meth)acrylic acid esters and maleimide-based compounds.

Examples of the cyanided vinyl compounds may include acrylonitrile, methacrylonitrile or the like. Of these cyanided vinyl compounds, preferred is acrylonitrile. Also, these cyanided vinyl compounds may be used singly or in combination of any two or more thereof.

Examples of the maleimide-based compounds may include maleimide, N-methyl maleimide, N-butyl maleimide, N-phenyl maleimide, N-(2-methylphenyl) maleimide, N-(4-hydroxyphenyl) maleimide, N-cyclohexyl maleimide, imide compounds of α,β-unsaturated dicarboxylic acids or the like. Of these maleimide-based compounds, preferred are N-phenyl maleimide and N-cyclohexyl maleimide. Also, these maleimide-based compounds may be used singly or in combination of any two or more thereof. Meanwhile, the maleimide-based compounds may be incorporated into the aromatic vinyl compound, for example, by such a method of copolymerizing the aromatic vinyl compound with maleic anhydride and then subjecting the resultant copolymer to imidization.

Examples of the (meth)acrylic acid esters may include acrylic acid esters such as methyl acrylate, ethyl acrylate, propyl acrylate, butyl acrylate, amyl acrylate, hexyl acrylate, octyl acrylate, 2-ethylhexyl acrylate, cyclohexyl acrylate and phenyl acrylate; and methacrylic acid esters such as methyl methacrylate, ethyl methacrylate, propyl methacrylate, butyl methacrylate, sec-butyl methacrylate, t-butyl methacrylate, isobutyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate and benzyl methacrylate. Of these (meth)acrylic acid esters, preferred are methyl methacrylate, butyl methacrylate and butyl acrylate, and more preferred is methyl methacrylate. These (meth)acrylic acid esters may be used singly or in combination of any two or more thereof.

Examples of the vinyl-based monomers having functional groups may include glycidyl methacrylate, glycidyl acrylate, 2-hydroxyethyl methacrylate, 2-hydroxyethyl acrylate, acrylic acid, methacrylic acid, acrylamide, vinyl oxazoline or the like. When these vinyl-based monomers having functional groups are copolymerized with the aromatic vinyl compound, the obtained copolymer can be enhanced in interfacial adhesion (compatibility) with other thermoplastic resins.

Among the other vinyl-based monomers copolymerizable with the aromatic vinyl compound in the rubber-reinforced copolymer resin (a1), the cyanided vinyl compound may be used in an amount of preferably 1 to 50% by mass, more preferably 2 to 40% by mass, especially preferably 5 to 30% by mass based on the monomer component, and the (meth)acrylic acid ester may be used in an amount of 5 to 88% by mass, more preferably 10 to 80% by mass, especially preferably 15 to 75% by mass based on the monomer component.

The (co)polymer (a2) is a (co)polymer of the above-described vinyl-based monomer. Examples of the preferred vinyl-based monomer are the same as those described in the above rubber-reinforced copolymer resin (a1), namely may include the aromatic vinyl compound, or the aromatic vinyl compound and the other vinyl-based monomer copolymerizable therewith. The preferred amount of the vinyl-based monomer used (such as the aromatic vinyl compound, cyanided vinyl compound and (meth)acrylic acid ester) as well as the preferred vinyl-based monomers and examples thereof are also the same as those described in the above rubber-reinforced copolymer resin (a1).

The graft percentage of the rubber-reinforced thermoplastic resin as the component (A) of the present invention is preferably 20 to 200% by mass, more preferably 30 to 150% by mass. When the graft percentage of the rubber-reinforced thermoplastic resin is less than 20% by mass, the effect of adding the rubber polymer (a) may not be sufficiently exhibited, thereby failing to attain a high impact resistance. On the other hand, when the graft percentage of the rubber-reinforced thermoplastic resin is more than 200% by mass, the obtained composition tends to be deteriorated in moldability. The graft percentage can be readily controlled by varying kinds and amounts of the rubber polymer (a), polymerization initiator, chain transfer agent, etc., as well as polymerization time and polymerization temperature. Meanwhile, the graft percentage (% by mass) is the value calculated from the following formula:

Graft Percentage (% by mass) = [(y - x)/x] x 100 wherein x is a mass (g) of a rubber component contained in 1 g of the rubber-reinforced thermoplastic resin; and y is a mass (g) of the methyl ethyl ketone-insoluble component.

The intrinsic viscosity [η] of a methyl ethyl ketone-soluble component contained in the rubber-reinforced thermoplastic resin as the component (A) of the present invention as measured at 30°C in dimethyl formamide, is usually 0.2 to 1.0 dl/g, preferably 0.3 to 1.0 dl/g, more preferably 0.3 to 0.8 dl/g. When the intrinsic viscosity [η] of the methyl ethyl ketone-soluble component is less than 0.2 dl/g, the obtained composition tends to be deteriorated in impact resistance. On the other hand, when the intrinsic viscosity [η] of the methyl ethyl ketone-soluble component is more than 1.0 dl/g, the obtained molded product tends to be deteriorated in appearance at the surface thereof. The intrinsic viscosity [η] of the methyl ethyl ketone-soluble component contained in the rubber-reinforced thermoplastic resin (A) can be readily controlled by varying kinds and amounts of the polymerization initiator, chain transfer agent, emulsifier, solvent, etc., as well as polymerization time and polymerization temperature.

The rubber-reinforced copolymer resin (a1) can be produced by subjecting the monomer component mainly comprising the above aromatic vinyl compound to radical graft polymerization in the presence of the above rubber polymer (a) by various polymerization methods such as emulsion polymerization, suspension polymerization, solution polymerization and mass polymerization. Of these polymerization methods, preferred is the emulsion polymerization. In this case, the emulsion polymerization may be performed using a polymerization initiator, a chain transfer agent (molecular weight modifier), an emulsifier, water, etc. Meanwhile, the above rubber polymer (a) and the monomer component used for producing the rubber-reinforced copolymer resin (a1) may be polymerized with each other by adding the monomer component at once in the presence of a whole amount of the rubber polymer (a), by dividedly or continuously adding the former to the latter, or by combining these adding methods. Alternatively, a whole or part of the rubber polymer (a) may be added to the reaction system in the course of the polymerization reaction.

Examples of the polymerization initiator may include cumene hydroperoxide, diisopropylbenzene hydroperoxide, potassium persulfate, azobisisobutylonitrile, benzoyl peroxide, lauroyl peroxide, t-butyl peroxylaurate, t-butyl peroxymonocarbonate or the like.

Examples of the chain transfer agent may include octyl mercaptan, n-dodecyl mercaptan, t-dodecyl mercaptan, n-hexyl mercaptan, tetraethyl thiuram sulfide, acrolein, methacrolein, allyl alcohol, 2-ethylhexy thioglycol or the like.

Examples of the emulsifier used for the emulsion polymerization may include sulfuric acid esters of higher alcohols, alkylbenzenesulfonic acid salts such as sodium dodecylbenzenesulfonate, aliphatic sulfonic acid salts such as sodium laurylsulfate, higher aliphatic carboxylates, rosinates, anionic surfactants such as phosphoric acid-based surfactants, or the like.

In the emulsion polymerization, particles obtained by solidifying the resin with a coagulating agent were usually washed with water and then dried to produce particles of the rubber-reinforced copolymer resin (a1). Examples of the coagulating agent may include inorganic salts such as magnesium sulfate and magnesium chloride, and acids such as sulfuric acid and hydrochloric acid. Of these coagulating agents, preferred is sulfuric acid.

The rubber-reinforced copolymer resin (a1) obtained by polymerizing the monomer component comprising the above vinyl-based monomer in the presence of the rubber polymer (a) contains not only a (co)polymer obtained by grafting the monomer component to the rubber polymer (a), but also an ungrafted component, i.e., a (co)polymer of the monomer component solely which is not grafted to the rubber polymer (a).

The (co)polymer (a2) may be produced by various polymerization methods such as such as emulsion polymerization, suspension polymerization, mass polymerization and solution polymerization.

The component (B) of the present invention is a methacrylic resin obtained by polymerizing from more than 90% by mass to 100% by mass of a methacrylic acid ester (in other words: methacrylic ester or methacrylate, as b1) with from 0% by mass to less than 10% by mass of the other vinyl-based monomer (b2) copolymerizable with the methacrylic acid ester, with the proviso that the total content of b1 and b2 is 100% by mass.

Examples of the methacrylic acid ester (b1) may include methacrylic acid esters such as methyl methacrylate, ethyl methacrylate, propyl methacrylate, butyl methacrylate, sec-butyl methacrylate, t-butyl methacrylate, isobutyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate and benzyl methacrylate. Of these methacrylic acid esters, preferred are methyl methacrylate and butyl methacrylate, and more preferred is methyl methacrylate. These methacrylic acid esters may be used singly or in combination of any two or more thereof.

Examples of the other vinyl-based monomer (b2) copolymerizable with the methacrylic acid ester (b1) may include aromatic vinyl compounds, cyanided vinyl compounds and maleimide-based compounds as well as vinyl-based monomers containing functional groups such as epoxy, hydroxy, carboxyl, amino, amido and oxazoline groups.

Examples of the above aromatic vinyl compounds may include styrene, α-methyl styrene, o-methyl styrene, p-methyl styrene, ethyl styrene, vinyl toluene, vinyl xylene, methyl-α-methyl styrene, t-butyl styrene, divinyl benzene, 1,1-diphenyl styrene, N,N-diethyl-p-aminomethyl styrene, N,N-diethyl-p-aminoethyl styrene, vinyl naphthalene, vinyl pyridine, chlorinated styrenes such as monochlorostyrene and dichlorostyrene, brominated styrenes such as monobromostyrene and dibromostyrene, monofluorostyrene or the like. Of these aromatic vinyl compounds, preferred are styrene, α-methyl styrene and p-methyl styrene. Also, these aromatic vinyl compounds may be used singly or in combination of any two or more thereof.

Examples of the cyanided vinyl compounds may include acrylonitrile, methacrylonitrile or the like. Of these cyanided vinyl compounds, preferred is acrylonitrile. Also, these cyanided vinyl compounds may be used singly or in combination of any two or more thereof.

Examples of the maleimide-based compounds may include maleimide, N-methyl maleimide, N-butyl maleimide, N-phenyl maleimide, N-(2-methylphenyl) maleimide, N-(4-hydroxyphenyl) maleimide, N-cyclohexyl maleimide, imide compounds of (α,β-unsaturated dicarboxylic acids, or the like. Of these maleimide-based compounds, preferred are N-phenyl maleimide and N-cyclohexyl maleimide. Also, these maleimide-based compounds may be used singly or in combination of any two or more thereof. Meanwhile, the maleimide-based compounds may be incorporated into the methacrylic acid ester, for example, by such a method of copolymerizing the methacrylic acid ester with maleic anhydride and then subjecting the resultant copolymer to imidization.

Examples of the vinyl-based monomers having functional groups may include glycidyl methacrylate, glycidyl acrylate, 2-hydroxyethyl methacrylate, 2-hydroxyethyl acrylate, acrylic acid, methacrylic acid, acrylamide, vinyl oxazoline or the like. When these vinyl-based monomers having functional groups are copolymerized with the methacrylic acid ester, the obtained copolymer can be enhanced in interfacial adhesion (compatibility) with other thermoplastic resins.

The preferred other vinyl-based monomer (b2) copolymerizable with the methacrylic acid ester (b1) is (meth)acrylic acid. The other vinyl-based monomer (b2) copolymerizable with the methacrylic acid ester (b1) may comprise the aromatic vinyl compound solely, and is preferably at least two monomers selected from the group consisting of aromatic vinyl compounds, cyanided vinyl compounds and maleimide-based compounds. More preferably, the other vinyl-based monomer (b2) is a combination of the aromatic vinyl compound, cyanided vinyl compound and/or maleimide-based compound.

The amounts of the methacrylic acid ester (b1) and the other vinyl-based monomer (b2) copolymerizable with the methacrylic acid ester which are used for producing the methacrylic resin as the component (B) of the present invention, are from more than 90% by mass to 100% by mass and from 0% by mass to less than 10% by mass, respectively, with the proviso that the total content of b1 and b2 is 100% by mass. It is more preferred that the amount of the methacrylic acid ester (b1) used is 99 to 100% by mass, i.e., the methacrylic acid ester (b1) is in the form of a substantially homopolymer of the methacrylic acid ester. When the amount of the methacrylic acid ester (b1) used is not more than 90% by mass, the obtained composition tends to be deteriorated in white coloring property upon laser-marking. The methacrylic resin as the component (B) of the present invention may be used in the form of a mixture of two or more kinds of methacrylic resins that are different in composition and molecular weight from each other. However, even in such a case, it is required that the amount of units of the methacrylic acid ester (b1) used therein satisfies the above-specified range.

The methacrylic resin as the component (B) of the present invention may also be a rubber-reinforced methacrylic resin reinforced with a rubber polymer in an amount of preferably 1 to 30 parts by mass based on 100 parts by mass of the methacrylic resin. Examples of the rubber polymer may include those described above as the rubber polymer (a) used in the component (A).

The methacrylic resin as the component (B) of the present invention may be produced by various methods such as emulsion polymerization, solution polymerization, mass polymerization and suspension polymerization.

The component (C) of the present invention includes a maleimide-based (co)polymer (C1) excluding the component (B) and/or an aromatic polycarbonate resin (C2).

Examples of the above maleimide-based (co)polymer as the component (C1) may include those (co)polymers obtained by homopolymerizing one monomer selected from the group consisting of maleimide-based compounds such as maleimide, N-methyl maleimide, N-butyl maleimide, N-phenyl maleimide, N-(2-methylphenyl) maleimide, N-(4-hydroxyphenyl) maleimide and N-cyclohexyl maleimide, or polymerizing two or more kinds thereof. In the case where the component (C1) is in the form of a copolymer, examples of the other comonomer copolymerizable with the maleimide-based compound may include (meth)acrylic acid esters, aromatic vinyl compounds, cyanided vinyl compounds or the like. Of the above maleimide-based compounds, preferred are N-substituted maleimide-based compounds, and more preferred is N-phenyl maleimide. Meanwhile, the maleimide-based monomer units may be incorporated into the copolymer by subjecting the resultant copolymer to post-imidization.

When the maleimide-based (co)polymer as the component (C1) is added, the obtained composition can be improved in heat resistance. The content of maleimide units in the maleimide-based (co)polymer (C1) is usually 10 to 60% by mass, preferably 20 to 35% by mass. When the content of the maleimide units is higher in the above range, the obtained composition can show an excellent heat resistance but slightly poor appearance, and when the content of the maleimide units is lower in the above range, the obtained composition can show an excellent appearance but slightly poor heat resistance. Therefore, when the content of the maleimide units in the maleimide-based (co)polymer (C1) may be selected to 20 to 35% by mass, the obtained composition is well balanced between heat resistance and appearance.

As the aromatic polycarbonate resin as the component (C2), there may be used various aromatic carbonate resins, for example, such as (1) those resins obtained by reacting various dihydroxyaryl compounds with phosgene (phosgene method), and (2) those resins obtained by transesterifying the dihydroxyaryl compound with diphenyl carbonate (transesterification method). The preferred aromatic polycarbonate resin is 2,2-bis(4-hydroxyphenyl)propane, i.e., a polycarbonate resin obtained by reacting bisphenol A with phosgene. The aromatic polycarbonate resin as the component (C2) has a viscosity-average molecular weight of preferably 13,000 to 32,0000, more preferably 14,000 to 31,000, especially preferably 15,000 to 30,000.

When the aromatic polycarbonate resin as the component (C2) is added, the obtained composition can be improved in heat resistance and appearance.

Also, as the component (C) of the present invention, the maleimide-based (co)polymer (C1) and the aromatic polycarbonate resin (C2) may be used in combination. In this case, the obtained composition is excellent in the desired properties of the present invention, especially in both heat resistance and appearance.

As the black-based substance as the component (D) of the present invention, there may be used dyes, pigments, etc., without any particular limitations as long as they show a reflectance of not more than 10%, preferably not more than 5% over a whole wavelength range of 400 to 700 nm as observed in a wavelength-reflectance curve thereof. That is, the black-based substance (D) is preferably such a material capable of absorbing light having a wavelength over a whole range of from 400 to 700 nm. Examples of the black-based substance (D) may include carbon black, black iron oxide, titanium black, graphite or the like. These black-based substances may be used singly or in combination of any two or more thereof.

Specific examples of the carbon black may include acetylene black, channel black, furnace black, koechen black or the like. The particle diameter of the carbon black is preferably 10 to 80 nm, more preferably 12 to 40 nm. The carbon black having a smaller particle diameter can exhibit a more excellent dispersion in resins, and can provide a composition having a more excellent laser-marking color-developing property. The carbon black preferably has a specific surface area of 20 to 1,500 m²/g, an oil absorption of 35 to 300 ml/100g, and a pH value of 2 to 10.

The above black iron oxide is generally an iron oxide represented by the formula: Fe₃O₄ or FeO•Fe₂O₃. The particle diameter of the black iron oxide is preferably 0.3 to 0.8 µm, more preferably 0.4 to 0.6 µm. The shape of the black iron oxide may be of any suitable shape such as spherical shape, cubic shape and acicular shape. Of these particles, preferred are particles having a cubic shape.

The above titanium black is a compound obtained by reducing titanium dioxide. The particle diameter of the titanium black is preferably 0.1 to 60 µm, more preferably 1 to 20 µm.

The contents of the respective components of the white coloring laser-marking thermoplastic resin composition according to the present invention are described below, assuming that the total content of the components (A), (B) and (C) is 100% by mass. The content of the component (A) is usually 10 to 90% by mass, preferably 20 to 70% by mass, more preferably 30 to 65% by mass. When the content of the component (A) is less than 10% by mass, the obtained composition tends to be deteriorated in impact resistance. On the other hand, when the content of the component (A) is more than 90% by mass, the obtained composition tends to be deteriorated in white coloring property.

The content of the component (B) is usually 9 to 65% by mass, preferably 30 to 65% by mass, more preferably 31 to 64% by mass. When the content of the component (B) is less than 9% by mass, the obtained composition tends to be deteriorated in white coloring property. On the other hand, when the content of the component (B) is more than 65% by mass, the obtained composition tends to be deteriorated in impact strength.

The content of the component (C) is usually 1 to 81% by mass, preferably 5 to 60% by mass, more preferably 5 to 40% by mass. When the content of the component (C) is less than 1% by mass, the obtained composition tends to be deteriorated in heat resistance. On the other hand, when the content of the component (C) is more than 81% by mass, the obtained composition tends to be deteriorated in impact strength or white coloring property.

The content of the component (D) is 0.01 to 5 parts by mass, preferably 0.01 to 3 parts by mass, more preferably 0.03 to 3 parts by mass based on 100 parts by mass of a total amount of the components (A), (B) and (C). When the content of the component (D) is less than 0.01 parts by mass, the obtained composition tends to be deteriorated in white coloring property. On the other hand, when the content of the component (D) is more than 5 parts by mass, the obtained composition tends to be deteriorated in white coloring property or impact strength.

The white coloring laser-marking thermoplastic resin composition of the present invention contains the rubber polymer (a) in an amount of preferably 5 to 40% by mass, more preferably 5 to 35% by mass, especially preferably 7 to 25% by mass. When the content of the rubber polymer (a) lies within the above-specified range, the obtained composition is well balanced between impact resistance and rigidity.

The white coloring laser-marking thermoplastic resin composition of the present invention may contain, if required, particles having an average particle diameter of 0.05 to 150 µm and/or epoxy-containing polymers, etc., in order to improve a durability of white-colored portions thereof. The amount of these materials added is preferably 0.01 to 10 parts by mass, more preferably 0.05 to 8 parts by mass based on 100 parts by mass of the white coloring laser-marking thermoplastic resin composition of the present invention.

Examples of the particles added may include inorganic particles, organic particles and inorganic organic composite particles. Specific examples of the inorganic particles may include particles of calcium phosphate, calcium carbonate, silica, alumina, talc, titanium dioxide, magnesium oxide, barium sulfate or inorganic compounds obtained mainly from these compounds, or the like. Specific examples of the organic particles may include polystyrene-based cross-linked particles, divinyl benzene-based cross-linked particles, polymethyl methacrylate-based cross-linked particles, styrene-methyl methacrylate-based cross-linked particles, particles made of inorganic salts of higher fatty acids, or the like. Specific examples of the inorganic organic composite particles may include particles obtained by dispersing inorganic substances such as silica and alumina inside of polymers, particles obtained by adsorbing fine particles such as silica onto the surface of polymers, or the like.

These particles may be used singly or in combination of any two or more thereof. The particles contains the above materials as main components in an amount of preferably not less than 50% by mass, more preferably not less than 60% by mass. Meanwhile, the particles used for improving the durability of the white-colored portions or the dispersibility are not particularly restricted to the components exemplified above, and further the following additives may be used in order to accomplish the objects of the present invention.

That is, the thermoplastic resin composition of the present invention may also contain such a component capable of finally forming fine particles having the above-specified average particle diameter by heat applied upon molding thereof. Examples of the fine particle-forming component may include silicone oil, thermosetting polymer particles or the like.
The silicone oil is not particularly restricted. Examples of the silicone oil may include dimethyl silicone oil, methylphenyl silicone oil, methyl hydrogen silicone oil, modified silicone oils or the like. The molecular weight, etc., of the silicone oil are also not particularly restricted. Meanwhile, the thus formed particles preferably have a softening point of not less than 100°C. Further, the composition may also contain a component capable of forming fine particles by irradiation of laser during the laser marking process.

Examples of the epoxy-containing polymers that may be optionally added to improve a durability of the color-developed portions, may include those polymers containing the monomer units composed of epoxy-containing unsaturated compounds in an amount of 5 to 70% by mass.

The white coloring laser-marking thermoplastic resin composition of the present invention may further contain various additives according to objects and applications thereof. Examples of the additives may include fillers, anti-weathering agents, antistatic agents, flame retardants, flame-retarding assistants, antioxidants, plasticizers, lubricants (e.g., metal soaps such as calcium stearate and magnesium stearate), coupling agents, or the like.

Examples of the fillers may include glass fibers, carbon fibers, glass beads, wollastonite, rock filler, mica, glass flakes, milled fibers, molybdenum disulfide, zinc oxide whiskers, calcium titanate whiskers or the like. These fillers may be used singly or in combination of any two or more thereof. When the filler is blended in the white coloring laser-marking thermoplastic resin composition of the present invention, the molded product obtained therefrom can exhibit a good rigidity, a good heat resistance (resistance to high heat-deformation temperature) or the like. The fibrous fillers such as glass fibers and carbon fibers preferably have a fiber diameter of 6 to 20 µm and a fiber length of not less than 30 µm.

The amount of the fillers blended is preferably 1 to 50 parts by mass, more preferably 2 to 30 parts by mass based on 100 parts by mass of the white coloring laser-marking thermoplastic resin composition of the present invention.
When the amount of the fillers blended is too large, the obtained composition tends to be deteriorated in laser-marking property.

Examples of the anti-weathering agent may include organic phosphorus-based compounds, organic sulfur-based compounds, hydroxyl-containing organic compounds or the like. These anti-weathering agents may be used singly or in combination of any two or more thereof. The amount of the anti-weathering agent blended is preferably 0.1 to 10 parts by weight, more preferably 0.5 to 5 parts by weight based on 100 parts by weight of the white coloring laser-marking thermoplastic resin composition of the present invention.

Examples of the antistatic agents may include sulfonates containing polyether groups or alkyl groups, or the like. These antistatic agents may be used singly or in combination of any two or more thereof. The amount of the antistatic agent blended is preferably 0.1 to 10 parts by weight, more preferably 0.5 to 5 parts by weight based on 100 parts by weight of the white coloring laser-marking thermoplastic resin composition of the present invention.

Examples of the flame retardants may include halogen-based flame retardants, organophosphorus-based flame retardants, nitrogen-containing compounds, metal hydroxides, antimony compounds or the like. Specific examples of the halogen-based flame retardants may include oligomers of tetrabromobisphenol A (whose epoxy end groups may or may not be sealed with tribromophenol, methyl alcohol, ethyl alcohol, etc.), brominated styrene, post-brominated styrene, oligomers of brominated polycarbonates, tetrabromobisphenol A, decabromodiphenyl ether, chlorinated polystyrene, aliphatic chlorine compounds or the like. Of these halogen-based flame retardants, preferred are oligomers of tetrabromobisphenol A, and the molecular weight of the oligomers is preferably 1,000 to 6,000.

Examples of the organophosphorus-based flame retardants may include triphenyl phosphate, trixylenyl phosphate, tricresyl phosphate, trixylenyl thiophosphate, hydroquinone bis(diphenylphosphate), resorcinol bis(diphenylphosphate), resorcinol bis(dixylenylphosphate), oligomers of triphenyl phosphate or the like. Of these organophosphorus-based flame retardants, preferred are triphenyl phosphate, trixylenyl phosphate and resorcinol bis(dixylenylphosphate). Also, the phosphorus concentration in the organophosphorus-based flame retardants is preferably 4 to 30% by mass, more preferably 6 to 25% by mass.

Examples of the above nitrogen-containing compounds may include melamine, cyclized isocyanates or the like. Examples of the above antimony compounds may include antimony trioxide, antimony pentoxide, colloidal antimony pentoxide or the like. Examples of the metal hydroxides may include magnesium hydroxide, aluminum hydroxide or the like.

The amount of the flame retardant blended is preferably 1 to 50 parts by mass, more preferably 2 to 30 parts by mass based on 100 parts by mass of the white coloring laser-marking thermoplastic resin composition of the present invention.
When the amount of the flame retardant blended is less than 1 part by mass, the obtained composition may fail to be sufficiently improved in flame retardancy. On the other hand, when the amount of the flame retardant blended is more than 50 parts by mass, the obtained composition tends to be deteriorated in impact resistance and laser-marking property.

Further, the white coloring laser-marking thermoplastic resin composition of the present invention may also contain the other thermoplastic resins, thermoplastic elastomers, thermosetting resins, etc., according to required properties and applications thereof. Examples of the other thermoplastic resins may include polyolefins such as polyethylene and polypropylene, polyesters such as polyethylene terephthalate, polybutylene terephthalate and polyethylene naphthalate, polyamides, polysulfones, polyether sulfones, polyphenylene sulfide, liquid crystal polymers, polyvinylidene fluoride, polytetrafluoroethylene, styrene-vinylidene acetate copolymers, polyacetal resins, polyether ester amides, polyamide elastomers, polyamide imide elastomers, polyester elastomers or the like. These resins or elastomers may be used singly or in combination of any two or more thereof.

Among these other thermoplastic resins, when polyethylene, polypropylene, polyamides, etc., are blended in the thermoplastic resin composition of the present invention, it is possible to impart an excellent laser-marking white coloring property thereto. In this case, the amount of these polymers blended is preferably 1 to 50 parts by mass, more preferably 5 to 50 parts by mass based on 100 parts by mass of the white coloring laser-marking thermoplastic resin composition of the present invention.

Also, among these other thermoplastic resins, when polyamide elastomers, polyether ester amides, etc., are blended in the thermoplastic resin composition of the present invention, it is possible to impart a permanent electrification property thereto. In this case, the amount of these polymers blended is preferably 0.1 to 30 parts by mass, more preferably 1 to 20 parts by mass based on 100 parts by mass of the white coloring laser-marking thermoplastic resin composition of the present invention.

The white coloring laser-marking thermoplastic resin composition of the present invention can be produced by kneading the respective components together using various extruders, Banbury mixer, kneader, rolls, feeder ruder, etc., and is preferably produced using a twin-screw extruder. The respective components may be kneaded together at once or while intermittently adding in several divided parts.

The white coloring laser-marking thermoplastic resin composition of the present invention can be formed into various molded products such as housings of apparatuses such as office automation (OA) products, domestic appliances, automotive interior trims and car navigation devices, and housings of audio and visual devices such as CD players and MD players as well as various keyboards, various buttons, various switches. various housings, chassises, trays, etc., by various molding methods such as injection-molding, sheet extrusion, vacuum forming, profile extrusion, foam molding, injection pressing, press molding, blow molding, etc.

When a laser is irradiated on the surface of the thus obtained molded product, a clear white color can be developed thereon. As the laser, there may be used gas lasers such as He-Ne laser, Ar laser, CO₂ laser and excimer laser, solid lasers such as YAG laser, semiconductor laser, dye laser or the like. Of these lasers, preferred are CO₂ laser, excimer laser and YAG laser. The YAG laser has a main wavelength of 1,064 nm. The printed portions color-developed by the laser-marking method are more excellent in anti-weathering property as well as wear resistance and, therefore, can exhibit a higher practical applicability, than those formed by ordinary printing methods.

The mechanism of such a color-developing phenomenon as observed when the molded product produced from the white coloring laser-marking thermoplastic resin composition of the present invention is irradiated with laser, is considered as follows, though not clearly known. That is, the black substance such as carbon contained in the molded product absorbs the laser ray irradiated, and is vaporized from the laser-irradiated portions. As a result, the black substance is eliminated or lessened at the irradiated portions, so that the laser-irradiated portions are colored white.

Alternative mechanism of the color development is considered as follows. That is, the laser irradiated to and absorbed by the black substance is converted into heat which then allows the (meth)acrylic acid ester component contained in the molded product to be decomposed and foamed. The foamed portions have a different reflectance from that of laser-non-irradiated portions and, as a result, exhibit not black color but white color. In such a foaming phenomenon, the foamed portions of the molded product tend to be swelled up from the laser-non-irradiated portions, though the swelling degree varies depending upon wavelength and output power of the laser. The height of the swelled portions of the molded product is usually in the range of 1 to 100 µm. When the height of the swelled portions is in the range of from 10 to 80 µm, it becomes possible to more clearly recognize the irradiated (printed) portions that are color-developed by laser-marking. The height of the foamed portions can also be used for producing braille products. Meanwhile, the irradiation of laser may cause a surface layer portion of the molded product to be foamed. In this case, the depth of the foamed surface layer portion is about 10 to 200 µm.

Meanwhile, the durability of white coloring property (durable recognizability of white-colored portions) of the white coloring laser-marking thermoplastic resin composition according to the present invention, means a property for preventing the swelled portions (white character-forming portions) foamed upon irradiation with laser from being broken or damaged by repeated key touches, i.e., such a property for preventing the white characters formed thereon from becoming unrecognizable.

Thus, the white coloring laser-marking thermoplastic resin composition of the present invention can provide a molded product capable of not only exhibiting excellent impact resistance and heat resistance, but also forming clear and highly durable recognizable marks thereon by irradiation with laser.

### EXAMPLES

The present invention is described in more detail by the following Examples, but these Examples are only illustrative and, therefore, not intended to limit the scope of the present invention thereto. Meanwhile, in the following Examples and Comparative Examples, "part" and "%" represent "part by mass" and "% by mass", respectively, unless otherwise specified. Further, various properties were measured and evaluated by the following methods.

### (1) Appearance of molded product:

The composition obtained by blending the respective components together was molded using an injection-molding machine to obtain a plate-shaped molded product having a size of 40 mm in length, 100 mm in width and 2.5 mm in thickness. The appearance of the thus obtained molded product was visually observed. The results were evaluated according to the following ratings.
- A:: Good
- B:: Poor (defective appearance occurred)

### (2) Impact resistance:

The plate-shaped molded product obtained in the above (1) was used as a test specimen. A load of 200 gf was dropped from a height of 40 cm on the test specimen using a DuPont impact tester to measure its impact strength. The results were evaluated according to the following ratings.
- A:: Not broken and no problem upon practical use
- B:: Broken with possibility of causing problems

### (3) Evaluation of laser-marking property:

The surface of the plate-shaped molded product obtained in the above (1) was laser-marked by a laser marker "Star Mark 65W" (YAG laser) manufactured by Carl Barssel Co., Ltd. The color-developing property, recognizability and clearness of the portions white-colored by the irradiation with laser were visually observed and evaluated according to the following ratings.
- A:: Good (white-colored marks with good clearness and recognizability)
- B:: Not poor (slightly deteriorated in recognizability and clearness)
- C:: Poor (extremely deteriorated in recognizability) and clearness

### (4) Evaluation of durability test of laser-marked surface:

The laser-marked molded product obtained in the above (3) was subjected to a keying test in which a keying load of 2 kg was applied onto its laser-marked surface (30 mm in length and 30 mm in width), and the keying operation was repeated 1,000,000 times. After the keying test, the laser-marked surface was visually observed to evaluate its appearance according to the following ratings.
- A:: Good
- B:: Not poor (no problem upon practical use)
- C:: Poor (deteriorated in clearness and recognizability, and any problem will occur upon practical use)

### (5) Heat resistance:

The composition obtained by blending the respective components together was molded using an injection-molding machine to obtain a plate-shaped molded product having a size of 15 mm in length, 15 mm in width and 1.5 mm in thickness. The thus obtained molded product was allowed to stand for 50 hours under a constant-temperature and constant-humidity condition, i.e., at 25°C and a relative humidity of 50%. After the standing test, the appearance of the molded product was visually observed. The results were evaluated according to the following ratings.
- A:: Good (no deformed appearance after standing test)
- B:: Poor (some deformed appearance after standing test)

The respective components used in Examples and Comparative Examples were as follows.

### 1. Preparation of rubber-reinforced thermoplastic resin as component (A):

### Production of rubber-reinforced copolymer resin (a1):

100 parts of ion-exchanged water, 1.5 parts of sodium dodecylbenzenesulfonate, 0.1 part of t-dodecyl mercaptan, and a rubber polymer composed of 15 parts (solid content) of polybutadiene having an average particle diameter of 310 nm, 15 parts of styrene and 5 parts of acrylonitrile, were charged into a 7-liter glass flask equipped with a stirrer, and heated while stirring. At the time at which the temperature reached 45°C, an aqueous activator solution composed of 0.1 part of sodium ethylenediaminetetracetate, 0.003 part of ferrous sulfate, 0.2 part of formaldehyde sodium sulfoxylate dihydrate and 15 parts of ion-exchanged water, and 0.1 part of diisopropylbenzenehydroperoxide, were added to the flask, and the contents Of the flask were continuously reacted with each other for one hour.

Thereafter, a mixture composed of 50 parts of ion-exchanged water, 1 part of sodium dodecylbenzenesulfonate, 0.1 part of t-dodecyl mercaptan, 0.2 part of diisopropylhydroperoxide, 50 parts of styrene and 15 parts of acrylonitrile was continuously added to the reaction mixture over 3 hours to continue the polymerization reaction thereof. After completion of adding the mixture, the obtained reaction mixture was further continuously stirred for one hour, and then 0.2 part of 2,2-methylene-bis(4-ethylene-6-t-butylphenol) was added thereto. The resultant reaction product was taken out of the flask. The latex of the reaction product was solidified with 2 parts of magnesium chloride, and the obtained solids were sufficiently washed with water and then dried at 75°C for 24 hours, thereby obtaining a white powder of a rubber-reinforced copolymer resin (a1). It was confirmed that the thus obtained resin had a composition of butadiene rubber/styrene/acrylonitrile of 40/42/18 (mol%), a polymerization conversion ratio of 97%, a graft percentage of 50% and an intrinsic viscosity of 0.45 dl/g.

### Copolymer (a2):

Styrene-acrylonitrile copolymer (polymerization ratio: 75/25 (mass%)) having an intrinsic viscosity of 0.5 dl/g was used.

### 2. Methacrylic resin as component (B):

(1) B-1: ACRYPET VH101 (Registered trade name, substantially methyl methacrylate homopolymer (content of methyl methacrylate unit: 99% or more, other unit: methyl methacrylic acid, melt flaw rate=2.0g/10min. (230°C, 37.3N, ASTM D1238) produced by Mitsubishi Rayon Co., Ltd.)
(2) B-2: ACRYPET MF101 (Registered trade name, methyl methacrylate/methyl methacrylic acid copolymer (87/13(mass)), melt flaw rate=14g/10min. (230°C, 37.3N, ASTM D1238) produced by Mitsubishi Rayon Co., Ltd.)

### 3. Component (C):

(1) C-1: SMA33-100 (Styrene-N-phenyl maleimide copolymer (N-phenyl maleimide content: 30 mass%; post-imidization product, Tg=170°C, Mw=150,000 produced by Mitsubishi Chemical Corporation)
(2) C-2: MIP-PAS1460 (Styrene-N-phenyl maleimide copolymer (N-phenyl maleimide content: 50 mass%; post-imidization product, Tg=175°C produced by Nippon Shokubai Co., Ltd.)
(3) C-3: NOVAREX 7022A (Registered trade name, Aromatic polycarbonate resin produced by Mitsubishi Engineering-Plastics Corporation, melt flaw rate: 14g/10min.))

### 4. Black-based substance as component (D):

Carbon black was used.

### Examples 1 to 5 and Comparative Examples 1 to 4:

The respective components were blended together at a mixing ratio shown in Tables 1 and 2, melt-kneaded at a temperature of 220 to 240°C using a single-screw extruder, and then injection-molded to produce a test specimen for evaluation. The thus obtained test specimen was subjected to various tests to evaluate properties thereof. The results are shown in Tables 1 and 2.

**Table 1**

| Examples | | 1 | 2 | 3 | 4 | 5 |
|---|---|---|---|---|---|---|
| Composition | | | | | | |
| (parts by mass) | | | | | | |
| Component (A) | a1 | 35 | 35 | 30 | 30 | 30 |
| | a2 | 10 | 10 | - | - | - |
| Component (B) | B-1 | 40 | 40 | 50 | 50 | 50 |
| | B-2 | - | - | - | - | - |
| Component (C) | C-1 | 15 | - | - | 20 | 10 |
| | C-2 | - | - | 20 | - | - |
| | C-3 | - | 15 | - | - | 10 |
| Component (D) | | 0.5 | 0.5 | 0.5 | 0.5 | 0.5 |

| Evaluation | | | | | | |
|---|---|---|---|---|---|---|
| Appearance of molded product | | A | A | A-B | A | A |
| Impact resistance | | A | A | A | A | A |
| Laser-marking white coloring property | | A | A | A | A | A |
| Laser-marking durability | | A | A | A | A | A |
| Heat resistance | | A | A | A | A | A |

**Table 2**

| Comparative Examples | | 1 | 2 | 3 | 4 |
|---|---|---|---|---|---|
| Composition | | | | | |
| (parts by mass) | | | | | |
| Component (A) | a1 | 30 | 30 | 30 | 30 |
| | a2 | 20 | 45 | 20 | - |
| Component (B) | B-1 | 50 | 5 | - | - |
| | B-2 | - | - | 50 | 50 |
| | B-3 | - | - | - | - |
| Component (C) | C-1 | - | 20 | - | 20 |
| | C-2 | - | - | - | - |
| | C-3 | - | - | - | - |
| Component (D) | | 0.5 | 0.5 | 0.5 | 0.5 |

| Evaluation | | | | | |
|---|---|---|---|---|---|
| Appearance of molded product | | A | A | A | A |
| Impact resistance | | A | A | A | A |
| Laser-marking white coloring property | | A | C | A | A |
| Laser-marking durability | | A | not measured | C | C |
| Heat resistance | | B | A | B | A |

The white coloring laser-marking thermoplastic resin compositions of the present invention which were obtained in Examples 1 to 5, were capable of achieving the objects of the present invention. The compositions obtained in Comparative Examples 1 and 3 which contained no component (C), were deteriorated in heat resistance. The composition obtained in Comparative Example 2 which contained the component (B) in an amount of less than 9% by mass, was deteriorated in white coloring property and the laser-marking durability could not be measured. The composition obtained in Comparative Example 4 which contained methacrylic acid ester units of the component (B) in an amount of not more than 90% by mass, was deteriorated in white coloring property.

## Claims

1. A laser-marking thermoplastic resin composition, comprising:
(A) a rubber-reinforced thermoplastic resin comprising:
(a1) a composition comprising a rubber-reinforced copolymer resin, said resin being obtainable by polymerizing in the presence of a rubber polymer (a) a monomer component comprising a first aromatic vinyl-based compound and optionally a second vinyl-based monomer copolymerizable therewith; and
(a2) a (co)polymer of a vinyl-based monomer; said rubber polymer (a) being contained in an amount of 0.5 to 60% by mass in the component (A);
(B) a methacrylic resin obtainable by polymerizing:
(b1) from more than 90% to 100% of a methacrylic acid ester, and
(b2) from 0% to less than 10% of another vinyl-based monomer (b2) copolymerizable with the methacrylic acid ester, based on the mass of b1 and b2;
(C) one or more maleimide-based (co)polymers other than component (B), an aromatic polycarbonate resin or mixture thereof; and
(D) a black-based substance;
components (A), (B), (C) and (D) being contained in amounts of 10 to 90%, 9 to 65%, 1 to 81% and 0.01 to 5%, respectively, each based on the mass of (A), (B) and (C).

2. A composition according to claim 1, wherein the content of methacrylic acid ester (b1) in the component (B) is 99 to 100% by mass.

3. A composition according to claim 1 or 2, wherein said component (C) is one or more maleimide-based (co)polymers other than component (B).

4. A composition according to any preceding claim which is a white coloring composition.
